Europäisches Patentamt

European Patent Office

Office européen des brevets

(11) Veröffentlichungsnummer: **0 486 868 A1**

## (12) EUROPÄISCHE PATENTANMELDUNG

(21) Anmeldenummer: **91118816.7**

(22) Anmeldetag: **05.11.91**

(51) Int. Cl.5: **B65G 17/26**, B65G 37/00, B21C 35/02

(30) Priorität: **17.11.90 DE 4036679**

(43) Veröffentlichungstag der Anmeldung:
**27.05.92 Patentblatt 92/22**

(84) Benannte Vertragsstaaten:
**AT BE DE ES FR GB LU NL**

(71) Anmelder: **FRIEDRICH THEYSOHN GmbH
Grovestrasse 20-22
W-3012 Langenhagen(DE)**

(72) Erfinder: **Reisinger, Ludwig
1456 Brainwood Lane
McPherson, Kansas 67460(US)**
Erfinder: **Gröblacher, Hans
823 S. Bypass
McPherson, Kansas 67460(US)**
Erfinder: **Topf, Siegfried
Brunnenweg 1-3
A-4569 Kirchdorf(AT)**

(74) Vertreter: **Döring, Roger, Dipl.-Ing.
Weidenkamp 2
W-3012 Langenhagen(DE)**

(54) Vorrichtung zum Ziehen eines langgestreckten Profilkörpers.

(57) Es wird eine Vorrichtung zum Ziehen eines langgestreckten Profilkörpers in seiner Längsrichtung angegeben, die aus zwei durch einen Spalt voneinander getrennten, jeweils über Umlenkräder geführten endlosen Transportketten mit einer Vielzahl von an den Kettengliedern befestigten Auflagen besteht. Die Umlenkräder sind an ihren Umfangsflächen mit Zähnen ausgerüstet, die in die Zwischenräume zwischen den Kettengliedern eingreifen. Um sicherzustellen, daß die Transportketten gleichförmig und ruckfrei bewegt werden, haben die Umlenkräder bei entsprechender Bemessung von Abstand und Anzahl der Kettenglieder mindestens 25 Zähne.

Fig. 1

Die Erfindung bezieht sich auf eine Vorrichtung zum Ziehen eines langgestreckten Profilkörpers in seiner Längsrichtung, bestehend aus zwei durch einen Spalt voneinander getrennten, jeweils über Umlenkräder geführten Transportketten mit einer Vielzahl von an den Kettengliedern befestigten Auflagen, zwischen denen der Profilkörper unter Anlage an den Auflagen beim Ziehen angeordnet ist, bei welcher die Umlenkräder an ihren Umfangsflächen mit Zähnen ausgerüstet sind, die in die Zwischenräume zwischen den Kettengliedern eingreifen (DE-Buch "Kabel-Herstellung" von Ehlers/Lau, 1956, Springer-Verlag, Seiten 156 und 157).

Derartige Vorrichtungen werden wegen der vielen voneinander getrennten Auflagen und ihres speziellen Bewegungsablaufs auch als "Raupenabzug" bezeichnet. Diese Bezeichnung wird auch in den folgenden Ausführungen verwendet. "Profilkörper" im Sinne der Erfindung können alle von Plastifiziervorrichtungen (Extrudern) erzeugten massiven Stränge und Hohlprofile sein.

Die beiden Transportketten des Raupenabzugs werden von den Umlenkrädern bewegt, von denen pro Transportkette mindestens eins angetrieben wird. Dabei sind ständig mehrere Zähne der Umlenkräder mit den Transportketten im Eingriff. Zur Sicherstellung einer gleichbleibenden Qualität der Profilkörper muß der Raupenabzug eine möglichst gleichförmige und ruckfreie Bewegung desselben garantieren, damit keine Rückwirkungen auf Herstellungs- und Bearbeitungsvorrichtungen auftreten, die von dem Profilkörper durchlaufen werden. Die Umlenkräder werden daher mit großer Maßgenauigkeit gefertigt und von Motoren angetrieben, die eine möglichst gleichförmige Bewegung erlauben. Trotzdem reichen die bekannten Raupenabzüge in vielen Fällen nicht aus, um den bei empfindlichen Profilkörpern erforderlichen ruckfreien Betrieb zu garantieren. Die Abzugsgeschwindigkeit der bekannten Raupenabzüge schwankt zwischen 2 % und 3 %. Das macht sich insbesondere bei höheren Geschwindigkeiten störend bemerkbar.

Der Erfindung liegt die Aufgabe zugrunde, den eingangs geschilderten Raupenabzug so zu gestalten, daß die Gleichförmigkeit seiner Bewegung ohne großen Aufwand wesentlich verbessert werden kann.

Diese Aufgabe wird gemäß der Erfindung dadurch gelöst, daß die Umlenkräder bei entsprechender Bemessung von Abstand und Anzahl der Kettenglieder mindestens 25 Zähne aufweisen.

Durch die gegenüber herkömmlichen Raupenabzügen wesentlich erhöhte Anzahl der Zähne der Umlenkräder hat sich überraschend herausgestellt, daß die Bewegung des Raupenabzugs ohne sonstige Maßnahmen wesentlich vergleichmäßigt werden kann. Die Schwankung der Abzugsgeschwindigkeit durch den Polygoneffekt liegt unabhängig von ihrer absoluten Größe unter 1 %. Wenn die Anzahl der Zähne zwischen 30 und 35 gewählt wird, kann die Schwankung der Abzugsgeschwindigkeit auf 0,5 % gesenkt werden.

Ein Ausführungsbeispiel des Erfindungsgegenstandes ist in den Zeichnungen dargestellt.

Es zeigen:

Fig. 1 eine Vorrichtung nach der Erfindung in schematischer Darstellung.

Fig. 2 einen Teil der Vorrichtung ebenfalls in schematischer, gegenüber Fig. 1 vergrößerter Darstellung.

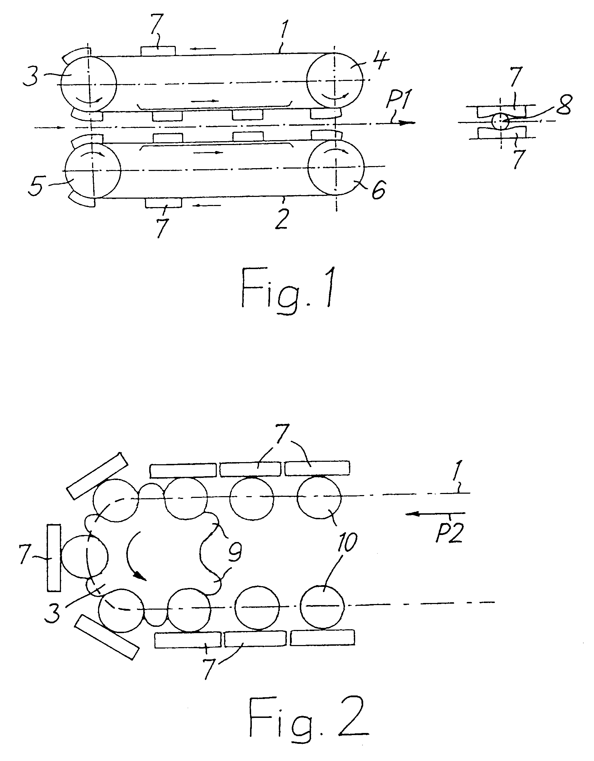

In Fig. 1 ist ein aus zwei nur schematisch angedeuteten Transportketten 1 und 2 bestehender Raupenabzug dargestellt. Die Transportketten 1 und 2 sind als endlose Gebilde um Umlenkräder 3 und 4 bzw. 5 und 6 herumgelegt. Jeweils eines der Umlenkräder 3 bis 6 wird angetrieben, so daß alle Umlenkräder 3 bis 6 und die beiden Transportketten 1 und 2 in Richtung der in Fig. 1 eingezeichneten Pfeile bewegt werden. An den Transportketten 1 und 2 sind Auflagen 7 aus Gummi oder Kunststoff - nach außen weisend - angebracht, von denen in Fig. 1 nur wenige dargestellt sind. Die Transportketten 1 und 2 sind übereinander oder nebeneinander so angebracht, daß ihre Auflagen 7 nur durch einen relativ schmalen Spalt getrennt sind. In diesem Spalt wird ein vom Raupenabzug in Richtung des Pfeiles P1 zu bewegender Profilkörper 8 aufgenommen. Die Auflagen 7 der Transportketten 1 und 2 liegen in Arbeitsposition fest an dem Profilkörper 8 an.

Die Umlenkräder 3 bis 6 sind an ihren Umfangsflächen mit Zähnen 9 versehen, so wie es in Fig. 2 für das Umlenkrad 3 dargestellt ist. Die Zähne 9 greifen in die Zwischenräume zwischen den Kettengliedern 10 der Transportketten 1 bzw. 2 ein. Die in Fig. 2 durch eine strichpunktierte Linie angedeutete Transportkette 1 wird dadurch bei Drehung des Umlenkrades 3 in Richtung des Pfeiles P2 mitgenommen.

Der Übersichtlichkeit halber ist in Fig. 2 das Umlenkrad 3 mit nur sechs Zähnen 9 dargestellt. In der Praxis liegt die Anzahl der Zähne der Umlenkräder 3 bis 6 wesentlich höher. Gemäß der Erfindung haben die Umlenkräder 3 bis 6 mindestens 25 Zähne 9. Die Abmessungen der Transportketten 1 und 2 sind dieser hohen Zähnezahl angepaßt.

In bevorzugter Ausführungsform liegt die Anzahl der Zähne 9 für die Umlenkräder 3 bis 6 zwischen 30 und 38. Bei einer Zähnezahl von 33 ergibt sich eine Schwankung der Abzugsgeschwindigkeit von nur 0,5 %. Sie wirkt sich auf die Qualität der transportierten Profilkörper 8 nicht mehr störend aus.

**Patentansprüche**

2

1. Vorrichtung zum Ziehen eines langgestreckten Profilkörpers in seiner Längsrichtung, bestehend aus zwei durch einen Spalt voneinander getrennten, jeweils über Umlenkräder geführten endlosen Transportketten mit einer Vielzahl von an den Kettengliedern befestigten Auflagen, zwischen denen der Profilkörper unter Anlage an den Auflagen beim Ziehen angeordnet ist, bei welcher die Umlenkräder an ihren Umfangsflächen mit Zähnen ausgerüstet sind, die in die Zwischenräume zwischen den Kettengliedern eingreifen, dadurch gekennzeichnet, daß die Umlenkräder (3 bis 6) bei entsprechender Bemessung von Abstand und Anzahl der Kettenglieder (10) mindestens 25 Zähne (9) aufweisen.

2. Vorrichtung nach Anspruch 1, dadurch gekennzeichnet, daß die Anzahl der Zähne (9) zwischen 30 und 38, vorzugsweise bei 33, liegt.

EP 0 486 868 A1

Fig. 1

Fig. 2

4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0 060 720 (HOEHN)<br>* Seite 4, Zeile 8 - Zeile 11; Abbildung 2 *<br>--- | 1,2 | B65G17/26<br>B65G37/00<br>B21C35/02 |
| D,A | EHLERS,W., LAU,H. 'KABELHERSTELLUNG'<br>1956 , SPRINGER VERLAG , BERLIN<br>* Seite 156 - Seite 157 *<br><br>----- | 1 | |
| | | | **RECHERCHIERTE SACHGEBIETE (Int. Cl.5 )**<br><br>B65G<br>B21C |

Der vorliegende Recherchenbericht wurde für alle Patentansprüche erstellt

| Recherchenort | Abschlußdatum der Recherche | Prüfer |
|---|---|---|
| DEN HAAG | 17 FEBRUAR 1992 | NEVILLE D.J. |